# EUROPEAN PATENT APPLICATION

(11) **EP 0 607 766 A1**
(43) Date of publication of application: **27.07.1994**
(21) Application number: 93830521.6
(22) Date of filing: 23.12.1993
(51) Int. Cl.: B01D 1/00, B01D 35/12

(54) **System for purifying and filtering waste water from mechanical machining processes**

(30) Priority: 23.12.1992 IT MI922959
(71) Applicant: SCUMED S.r.l., I-20099 Sesto San Giovanni (Milano) (IT)
(72) Inventor: Cannilla, Fabio, 20080 Basiglio, Milano 3 (IT)
(74) Representative: Cicogna, Franco

(57) **Abstract**

The present invention relates to a system for purifying and filtering waste water from mechanical machining processes, either of a conventional type or not, characterized in that said system comprises a first pumping element, for taking up the waste water and at least two filtering bodies, connected in parallel to a delivery duct, through respective delivery valves.

The filtering bodies are connected, through respective return valves, to a recirculation tank of the machine tool.

Moreover, there are provided a second pumping element, for delivering a washing liquid, in counter-current, to the filtering bodies and ducts for discharging the washing liquid leading to a decantation tank.

The pumping elements and valves are driven by a programmed logic computer.

## Description

### BACKGROUND OF THE INVENTION

The present invention relates to a system for purifying and filtering waste water from mechanical machining processes, either of a conventional type or not.

As is known, the mechanical machining processes which are conventionally used for machining and shape finishing the metal surfaces, to bring them to preset size and shape, depending on their final use, use an aqueous medium, for cooling purposes, since, during the machining steps, heat is generated, said aqueous medium being moreover employed for removing powder materials deriving from the machining operations.

In the case of not conventional machining operations, such as an electro-erosion operation, the above mentioned aqueous medium is mainly used for causing electric discharges to be transmitted through a workpiece to be processed.

The materials which are removed by these mechanical machining operations from the surfaces of the workpieces being processed, and which are in the form of very fine metal particles, having usually a size less than 5 micrometers, can not be directly discharged into the environment, since they are greatly polluting.

Thus, in order to remove these materials, the machine tools used in the above mentioned machining processes are conventionally provided with filtering systems including auxiliary means such as paper or foxil meal filter, which, per se, constitute a toxic waste.

In fact, these types of filters originate great disposal and maintenance problems, since they are susceptible to a possible clogging and, moreover, they are not suitable to provide a very precise and safe filtering of very fine particles.

### SUMMARY OF THE INVENTION

Accordingly, the aim of the present invention is to overcome the above mentioned drawbacks, by providing a filtering system which, as a filtering medium, uses inert materials, for example quartz sand or other suitable materials, having a suitable particle size, and, mainly, which is adapted to provide a continuous filtering operation without the need of interrupting the machining process, for example for replacing the filtering media, with the related shut off, labour and disposal costs.

Within the scope of the above mentioned aim, a main object of the invention is to provide such a waste waterfiltering system, which allows to remove and recovery from the above mentioned machining operations, and by suitable means, the very fine metal particles generated in the mentioned machining operations.

Yet another object of the present invention is to provide such a filtering system which is specifically designed for using several filtering units, which can be simultaneously operated, and which, moreover, can be easily made by using easily available elements and materials and which, furthermore, is very competitive from a mere economic standpoint.

According to one aspect of the present invention, the above mentioned aim and objects, as well as yet other objects, which will become more apparent hereinafter, are achieved by a system for purifying and filtering waste water deriving from mechanical machining processes, either of a conventional type or not, characterized in that said system comprises a first pumping element, for taking up said waste water from a machine tool or the like and for sending said waste water to at least two filtering bodies connected in n parallel to a delivery duct, said filtering bodies being moreover connected, through respective return valves, to a recirculation tank of said machine tool, and there being moreover provided a second pumping element for supplying a washing liquid, in a countercurrent relationship, onto said filtering bodies, and discharging ducts for discharging said washing liquid, leading to a decantation tank, said pumping elements and valves being controlled by a programmed-logic computer.

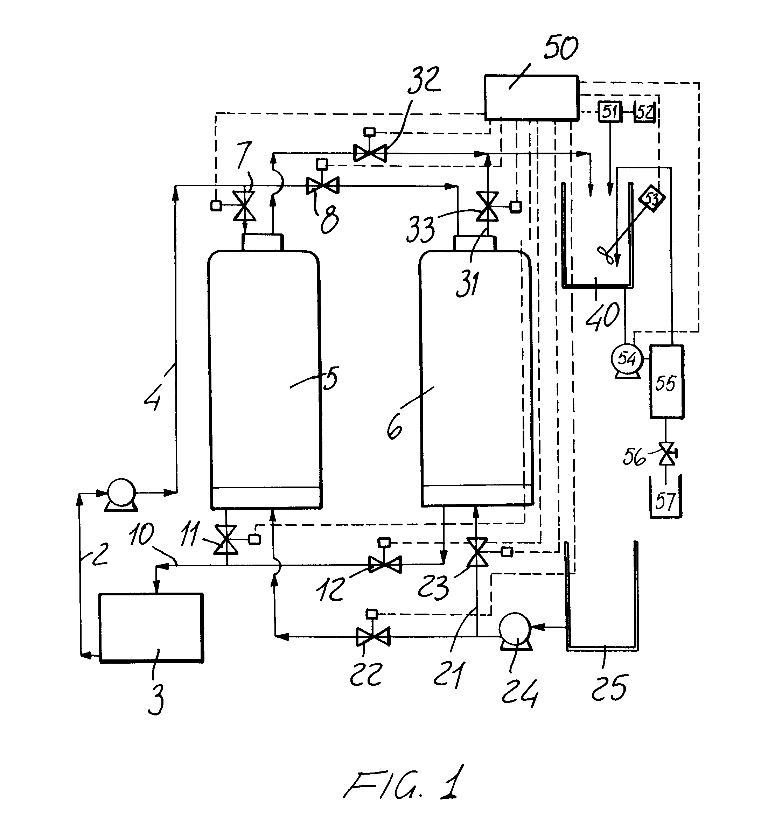

### BRIEF DESCRIPTION OF THE DRAWING

Further characteristics and advantages of the present invention will become more apparent here- ingafter from the following detailed disclosure of a preferred, though not exclusive, embodiment, of a system for purifying and filtering waste water from mechanical maching processes, either of a conventional type or not, which is illustrated, by way of an indicative but not limitative example, in the accompanying drawing the sole figure of which shows a schematic diagram of the subject system.

### DESCRIPTION OF THE PREFERRED EMBODIMENT

With reference to the number references of the above mentioned figure, the system for purifying and filtering waste water from mechanical machining processes, either of a conventional type or not, according to the present invention, comprises a first pumping element 1 which has its suction duct 2 communicating with the waste water tank of a generic machine tool, generally indicated at the reference number 3.

From the pumping element 1 there extends a delivery duct 4, which is connected to at least two filtering bodies, indicated at the reference numbers 5 and 6, in turn connected, in parallel, to the delivery duct 4 through a first delivery valve 7 and a second delivery valve 8.

The delivery is carried out simultaneously through all of the filtering elements which, in the embodiment shown in the drawing are two, but which, of course, could be provided in any desired numbers.

With the disclosed arrangement, by spreading the waste water delivery on a very large filtering surface, there is obtained a dip filtering of the waste water.

In particular, the above mentioned filtering bodies are constituted by inert materials, such as a quartz sand or any other suitable material, and are provided for being traversed by the waste water delivered by the pump 1, thereby possible polluting particles, even of a very fine size, present in this delivered water, will be retained by the sand material.

As shown, on the bottom portion of the filtering bodies there is provided a recirculation duct 10, which will cause the filtered purified water to be returned to the machine tool.

More specifically, the mentioned filtering bodies communicate with the recirculation duct 10 through a first return valve 11 and a second return valve 12.

At the bottom portion of the filtering bodies there are connected ducts for delivery a washing water, said ducts being indicated at the reference number20 and 21 and being controlled by a first washing liquid delivery valve 22 and a second washing liquid delivery valve 23, which washing liquid is delivered from a second pumping element 24 communicating with a washing liquid tank 25 or directly with the water system.

More specifically, the washing liquid is introduced in counter-current into one of the tanks, thereby there is' performed a counter-washing of the filtering medium, in order to remove therefrom metal particles which, if they would not be removed, would cause the filtering medium to be clogged.

On the top portion of the tanks there are moreover provided discharging ducts and, more specifically, a first discharging duct 30 and a second discharging duct 31, which are controlled by a first discharging valve 32 and a second discharging valve 33.

This discharging ducts lead to a decantation tank 40 or to a suitable vessel, provided with a filtering diaphragm, thereon the metal particles are retianed.

In both cases, that is in the decantation case and in the sieving case, the obtained purified water can be either recovered for a following processing cycle or directly discharged, since it does not hold herein any polluting material.

Moreover, in order to improve the decantation and fully remove the above mentioned polluting metal particles and colloidal material generated by the reaction of the metal ions which are present and the oxygen generated by the water electrolysis due to the electric discharge, particularly in the case in which low specific weight metal materials are processed (such as aluminium, metal carbides and the like), it is also possible to perform a chemical decantation which can be carried out as follows:
by means of a metering pump or any other suitable equivalent means, indicated at 51, connected to and controlled by said programmed logic means 50, as the waste water is delivered from the filtering elements 5 and 6 to the tank40, there is metered a preset amount of a chemical compound (having flocculating or aggregating properties and being suitably formulated) coming from a tank 52 and adapted to form and aggregate composite particles having a sufficient mass to allow them to be easily precipitated and separated from the aqueous phase.

The mixing of the chemical compound with the waste water derived from the counter-washing of the filtering elements 5 and 6 can be performed either spontaneously, by directly introducing said chemical compound into the counter-washing waste water delivery duct through a suitable valve, or by means of a stirring device 53, controlled by said programmed logic controlling means 50, which stirring device 53 will operate for a set time in order to cause the suspended metal particles to contact the chemical compound for causing said particles to agglomerate.

The sludge comprising said metal particles can be recovered from the decantation tank or from the filtering diaphragm and can be disposed as foundry scraps; this operation, in particular, can be carried out in several manners, either of a manual or of an automatic type.

To that end, and mainly in the case of the decantation process, it is possible to improve the separation of the solid phase constituted by the metal particles from the liquid phase by means of a suction pump 54 which, after having introduced into the tank 40 the waste counter-washing waterfrom the filtering elements 5 and 6 and after having supplied in a metered amount the chemical compound promoting the aggregation of the metal particles, under the control of the programmed logic controlling means 50, will take up the liquid material mixed with the aggregated metal particles from the bottom of the tank40 and will send this mixed material, under pressure, to a particle centrifuge separating device 55 which will separate the metal particles from the liquid phase and will discharge them either manually or automatically, through a valve 56 into a vessel 57 therefrom the discharged particles will be easily recovered and sent to the disposal operation.

Another important feature of the system according to the present invention is that this system is controlled by the above mentioned programmed logic controlling means, or computer 50, which controls both the valves and the pumping elements by automatically operating the filtering, counter-washing cycles as well as the polluting particle recovery cycles.

In particular, the computer can be programmed with several operation times, by means of a suitable keyboard, each key of which will correspond to a multiple of a time unit expressed in hours, such as, forex- ample, 4, 6, 8.

These times will permit, depending on the working load applied to the filter, to operate a counter-washing cycle of the filtering medium, in order to remove therefrom metal particles which would cause the filter to be clogged.

In a conventional operating cycle, all of the filtering bodies will be operated in parallel and, only during the washing operation on a filtering body, there will be removed from the filtering operation that specific filtering body in which the counter-current washing operation is performed.

More specifically, in this operation, during the starting step of the filtering cycle, the valves 7, 8, 11 and 12 will be opened, thereby the filtering operation will be performed simultaneously in the two filtering bodies 5 and 6, whereas the valves 22, 23, 32 and 33 will be closed.

After a set time, which is set by the programmed logic computer, one of the filtering bodies, for example the first filtering body 5, will be removed from the filtering operation or cycle.

Under these conditions, the valves 7 and 11 are closed, whereas the valves 8 and 12 are held in an open condition and will be opened the valves 22 and 32 performing the counter-washing of the filtering body.

At the end of the counter-washing of the filtering body, the valves 22 and 32 will be reclosed, whereas the valves 7 and 11 will be reopened, so as to recover the normal operation cycle with a parallel filtering on both the filtering bodies.

As the second filtering body is to be washed, the valves 8 and 12 will be closed and the valves 23 and 33 will be opened, thereby continuously repeating the above disclosed cycle.

All of the disclosed operating steps are directly controlled by the programmed logic computer, which will allow to precisely control the operation of the overall system.

The above disclosed operation steps are related to a system the operation of which is based on the use of two filtering bodies, but such an operation will be conceptually the same even in a case in which there would be provided a larger number of filtering bodies.

In this connection it should be apparent that the counter-washing operation does not affect the filtering operation, thereby the production of purified water will be continuous in the time, and the counter-washing being related to either one or more elements, whereas the remaining elements are involved in the filtering action.

In the disclosed examples, the counter-washing water is taken from the tank 25 and then supplied to a tank 40 in which there is separated the sludge; this operation can also be performed by taking up the water through the pump 24 directly from the water system and sending this water to the filtering operation on the diaphragm with a removal of the water.

In the first case there is performed a closed loop operation, thereby the water will be recovered for being re-used in the following operations.

This cycle is actually an ecologic cycle since it allows to recovery the polluting source and to recover water which actually represents an energy source.

From the above disclosure it should be apparent that the invention fully achieves the intended aim and objects.

In particular, the fact is to be pointed out that a system has been provided for purifying and filtering waste water derived from mechanical machining processes, either of a conventional type or not, which allows to perform a very good filtering operation, of a continuous type, and leading to a good recovery both of the polluting substances and of the washing water.

The invention as disclosed is susceptible to several variations and modifications which will come within the scope of the inventive idea.

Moreover, all of the details can be replaced by other technically equivalent elements.

In practicing the invention, the used materials, as well as the continget size and shapes can be any, depending on requirements.

## Claims

1. A system for purifying and filtering waste water deriving from mechanical machining processes, either of a conventional type or not, characterized in that said system comprises a first pumping element, for taking up said waste water from a machine tool or the like and for sending said waste water to at least two filtering bodies connected in parallel to a delivery duct, said filtering bodies being moreover connected, through respective return valves, to a recirculation tank of said machine tool, and there being moreover provided a second pumping element for supplying a washing liquid, in a counter-current relationship, onto said filtering bodies, and discharging ducts for discharging said washing liquid, leading to a decantation tank, said pumping elements and valves being controlled by a programmed-logic computer.

2. A system according to Claim 1, characterized in that, in the regular filtering steps, the filtering bodies are all used simultaneously, in a parallel relationship, for the filtering step.

3. A system according to one or more of the preceding claims, characterized in that said system comprises delivery valves for the washing liquid, leading to the bottom port ions of the fi Itering bodies.

4. A system according to one or more of the preceding claims, characterized in that said system further comprises discharging valves connected on the discharging ducts leading from the top portion of the filtering bodies.

5. A system according to one or more of the preceding claims, characterized in that said second pumping element is directly connected to the water system.

6. A system according to one or more of the preceding claims, characterized in that said discharging ducts lead to a filtering tank.

7. A system according to one or more of the preceding claims, characterized in that said filtering bodies are involved, for a reduced period of time, in the counter-washing step, and at least one of said filtering bodies being always connected to the filtering delivery pump.

8. A system according to one or more of the preceding claims, characterized in that said programmed-logic computer is adapted to control the automatic operation cycle of said system.

9. A system according to one or more of the preceding claims, characterized in that said system further comprises a device for performing a chemical decantation, which is carried out by means of a metering pump or the like, which is connected to and controlled by said programmed logic computer, and is provided for send ing the waste water derived from the counter-washing of said filtering elements to a tank.

10. A system according to one or more of the preceding claims, characterized in that in said system there is metered a preset amount of a chemical compound comprising a suitably formulated flocculating or aggregating agent, derived from a tank and adapted to promote the formation and aggregation of composite particles having a sufficient mass to allow said particles to precipitate and separate spontaneously from the aqueous phase.

11. A system according to one or more of the preceding claims, characterized in that in said system the mixing of said chemical compound with the counter-washing waste water can be performed spontaneously by introducing said chemical compound into said counter-washing waste water delivery duct through a suitable valve.

12. A system according to one or more of the preceding claims, characterized in that said mixing of said chemical compound with said filtering element counter-washing waste water is performed through a stirring device driven by said programmed logic computer, which will operate for a set time in order to cause the suspended metal particles to contact said chemical compound.

13. A system according to one or more of the preceding claims, characterized in that said system further comprises a decantation device in which the solid phase, comprising said metal particles, is separated from the liquid phase by means of a suction pump.

14. A system according to one or more of the preceding claims, characterized in that said suction pump communicates with said tank of said filtering element counter-washing waste water and performs a metered supplying of said chemical compound promoting the aggregation of said metal particles.

15. A system according to one or more of the preceding claims, characterized in that said metered supply is controlled by said programmed logic control means or computer which causes the liquid mixed with aggregated metal particles to be taken from the bottom of said tank and conveyed under pressure to a particle centrifuge separator, which will separate the particles from the liquid phase and will discharge them either manually or automatically through a valve into a vessel therefrom said particles can be easily recovered and sent to a disposal operation.
